# EUROPÄISCHE PATENTANMELDUNG

(11) **EP 4 667 521 A1**
(43) Veröffentlichungstag der Anmeldung: **24.12.2025**
(21) Anmeldenummer: 25181291.3
(22) Anmeldetag: 06.06.2025
(51) Int. Cl.: C08K 5/098, C08L 97/00

(54) **FORMULIERUNG ZUR HERSTELLUNG EINES PROZESSHILFSMITTELS, VERFAHREN ZUR HERSTELLUNG EINES PROZESSHILFSMITTELS SOWIE PROZESSHILFSMITTEL**

(30) Priorität: 07.06.2024 DE 102024115980
(71) Anmelder: Devinochem GmbH & Co. KG, 65201 Wiesbaden (DE)
(72) Erfinder: BARBE, Christian J., 65201 Wiesbaden (DE); ROTH, Florian, 65388 Schlangenbad (DE); GABEL, Falk, 65388 Schlangenbad (DE)
(74) Vertreter: Blumbach · Zinngrebe Patentanwälte PartG mbB

(57) **Zusammenfassung**

Die Erfindung betrifft allgemein eine Formulierung zur Herstellung eines Prozesshilfsmittels, wie beispielsweise eines Entformungsmittels bzw. Trennmittels, wie sie insbesondere bei der Herstellung von Gummimischungen und sonstigen Polymeren als Prozesshilfsmittel zum Einsatz kommen. Im Speziellen betrifft die Erfindung eine Formulierung für die Herstellung eines Prozesshilfsmittels, welches umweltschonender als bekannte Prozesshilfsmittel produziert wird oder zumindest produziert werden kann, insbesondere unter Einsatz von vorzugsweise wenigstens 20% von nachwachsenden Rohstoffen. Weiterhin betrifft die Erfindung ein Verfahren zur Herstellung eines Prozesshilfsmittels sowie das Prozesshilfsmittel selbst.

## Beschreibung

### Gebiet der Erfindung

Die Erfindung betrifft allgemein eine Formulierung zur Herstellung eines Prozesshilfsmittels, wie beispielsweise eines Entformungsmittels bzw. Trennmittels, wie sie insbesondere bei der Herstellung von Gummimischungen und sonstigen Polymeren als Prozesshilfsmittel zum Einsatz kommen. Im Speziellen betrifft die Erfindung eine Formulierung für die Herstellung eines Prozesshilfsmittels, welches noch umweltschonender als bekannte Prozesshilfsmittel produziert wird oder zumindest produziert werden kann, insbesondere unter Einsatz von vorzugsweise wenigstens 20% von nachwachsenden Rohstoffen. Weiterhin betrifft die Erfindung ein Verfahren zur Herstellung eines Prozesshilfsmittels sowie das Prozesshilfsmittel selbst.

Unter einer Formulierung wird dabei im Sinne der Offenbarung ein Stoffgemisch als beispielsweise Vorstufe eines Prozesshilfsmittels verstanden, die durch die Zugabe von einer weiteren Komponente, vorzugsweise beispielsweise Wasser, in eine anwendungskonforme Darreichungsform, und damit das Prozesshilfsmittel, überführt wird. D.h. die Formulierung kann beispielsweise in Form von Pulver, Granulaten, oder mit einer Gel- oder Pasten-artiger Konsistenz, die aber vorzugsweise noch fließ- und pumpfähig ist, vorliegen. Prozesshilfsmittel mit einem bestimmten funktionalen Charakter können entsprechend diesem Charakter beispielsweise auch als Trennmittel, Schmiermittel, Gleitmittel, Anti-Haft-Mittel, Entformungsmittels, Produkttrennmittel oder ähnlich bezeichnet werden. Diese Begriffe beschreiben Prozesshilfsmittel, die in anwendungsfertiger Darreichungsform vorliegen.

### Hintergrund der Erfindung

Wie ausgeführt betrifft die vorliegende Offenbarung allgemein eine Formulierung für die Herstellung eines Prozesshilfsmittels, welches beispielsweise als Entformungs- oder Trennmittel verwendet werden kann. Das Prozesshilfsmittel nach der Offenbarung kann beispielsweise in der Form einer Beschichtung, welche wie ein Trennmittel wirkt, verwendet werden, wobei hierbei unter einem Trennmittel verstanden wird, dass dies die Wirkung hat, aneinanderliegende Materialien trennbar zu halten. Mit anderen Worten kann das Prozesshilfsmittel in diesem Fall als ein Mittel mit schmiermittelartigen Eigenschaften verstanden und auch allgemein als Schmiermittel verstanden werden. Schmiermittel, oder synonym Schmierstoffe allgemein werden zur Schmierung eingesetzt und dienen zur Verringerung von Verklebung bzw. der Adhäsion von Oberflächen aneinander, nachfolgend auch als Anhaften bezeichnet, aber auch zur Verminderung von Reibung und Verschleiß sowie auch, beispielsweise durch die Verminderung von Reibungswärme, zur Kühlung. Das Prozesshilfsmittel kann auch als Formtrennmittel ausgestaltet sein, also als Prozesshilfsmittel, welches das Anhaften von Guss- und/oder Formteilen an der Form oder allgemein einem Werkstoff, welcher beim Abformprozess zum Einsatz kommt, verhindert oder zumindest reduziert und/oder vermindert. Weiterhin kann das Prozesshilfsmittel nach der vorliegenden Offenbarung auch als Gleitmittel wirken oder zum Einsatz kommen, worunter insbesondere verstanden wird, dass es eine Trennwirkung zwischen Oberflächen bzw. Stoffen, welche beispielsweise auch eine erhöhte Temperatur aufweisen können, aufweist, beispielsweise verhindert, dass eine Polymerschmelze an einer heißen Metalloberfläche, beispielsweise der Oberfläche einer Form oder eines Werkzeugs, anhaftet. Das Prozesshilfsmittel kann aber allgemein auch als Produkttrennmittel wirken, beispielsweise als das Verkleben von Schüttgut, Granulaten und/oder weiteren Vorformen eines Endproduktes, insbesondere eines polymerischen Endproduktes, verhinderndes Produkttrennmittel. Allgemein werden diese vorstehenden und anschließenden speziellen Ausführungen im Rahmen der vorliegenden Offenbarung unter dem Begriff des Prozesshilfsmittels subsumiert, wobei es sich insbesondere um ein eine Trennwirkung aufweisendes Prozesshilfsmittel handeln kann, worunter allgemein auch ein Produkttrennmittel hier unter dem allgemeinen Oberbegriff des Prozesshilfsmittels, insbesondere des eine Trennwirkung aufweisenden Prozesshilfsmittels, verstanden wird.

Als spezielle Ausführung eines Prozesshilfsmittels im Sinne der vorliegenden Offenbarung kann das Entformungsmittel (synonym: Trennmittel) verstanden werden. Das Prozesshilfsmittel der Offenbarung kann beispielhaft als Prozesshilfsmittel bei der Herstellung von Produkten aus oder umfassend Gummimischungen und/oder aus oder umfassend sonstige(n) organische(n) Polymere(n) verwendet werden. Als Entformungsmittel ausgestaltete Prozesshilfsmittel sind beispielsweise Mittel, welche auf die Oberfläche des erzeugten Produkts aus oder umfassend eine Gummimischung und/oder aus oder umfassend ein Polymer oder auf eine Form, die zur Erzeugung des Produkts verwendet wird, aufgebracht werden. Der aus dem Prozesshilfsmittel aufgebrachte Film wird allgemein Trennmittelfilm genannt. Im Rahmen der vorliegenden Offenbarung kann dieser aufgebrachte Film auch als Beschichtung oder Schicht bezeichnet und/oder verstanden werden. Der Zweck des Prozesshilfsmittels, beispielsweise des Entformungs- bzw. Trennmittels ist es, zu verhindern, dass das erzeugte Produkt an der Form und/oder an einem anderen, gleichartigen Produkt anhaftet. Möglich ist auch, dass das Produkt die Form eines langen Bandes aufweist, welches zum Lagern gestapelt oder gerollt wird, wobei die unterschiedlichen Lagen des Materials ebenfalls nicht aneinanderhaften sollen. Diese spezielle Ausführung wird hier beispielhaft genannt und stellt eine häufige Ausführungsform bzw. Anwendung des Prozesshilfsmittels nach der Offenbarung dar, sodass viele Eigenschaften des Prozesshilfsmittels nachfolgend anhand dieser speziellen Ausführungsform des Entformungs- bzw. Trennmittels beschrieben sind. Die Anwendung des Prozesshilfsmittels ist aber keinesfalls auf diese Anwendung beschränkt, sondern, wie vorstehend auch ausführlich ausgeführt, es kann in weiteren Bereichen angewendet werden.

Zweckmäßig umfassen bekannte Prozesshilfsmittel, insbesondere eine Trennwirkung aufweisende Prozesshilfsmittel, des Standes der Technik dafür ein Mittel, welches auf die Oberfläche entweder der Form oder des Produkts selbst oder gegebenenfalls auf beide aufgebracht wird/werden und dort als ein Trennkörper oder auch Abstandshalter wirken kann, in der Verwendung des Prozesshilfsmittels als Entformungs- bzw. Trennmittel also den direkten Kontakt des Produktes mit einem anderen Produkt, sich selbst und/oder der Form verhindert. Als "direkter Kontakt" wird im Rahmen der vorliegenden Offenbarung der physische Kontakt zwischen der Oberfläche des Produkts und einer anderen Oberfläche, beispielsweise der einer Form oder einer anderen Stelle des Produkts (beispielsweise einem anderen Teil einer Polymerbahn), verstanden. Die Oberflächen berühren oder kontaktieren sich beim direkten Kontakt im Sinne der Offenbarung also. Dies kann beispielsweise der Fall sein, indem ein Film aus oder umfassend das Prozesshilfsmittel nach der Offenbarung auf wenigstens eine der in Rede stehenden Oberflächen aufgebracht ist. Allerdings ist es nicht zwingend erforderlich, dass das Prozesshilfsmittel in Form einer Beschichtung und/oder eines Films auf wenigstens eine Oberfläche aufgebracht ist, sondern es kann beispielsweise auch in Pulverform auf die Oberfläche aufgebracht sein. Es kann auch möglich sein, dass das Prozesshilfsmittel in das Material einer der Oberflächen eingebracht ist, beispielsweise also in das polymerische Material eingebracht ist. Die Wirkung des Prozesshilfsmittels, gleich in welcher Form es angewendet wird, soll ein Anhaften oder Verkleben der Oberflächen verhindern. Als Mechanismus wird allgemein angenommen, dass wenigstens eine Komponente des Prozesshilfsmittels als ein Abstandshalter oder Trennkörper wirkt, welcher eine physikalische und/oder chemische Bindung zwischen der Oberfläche des erzeugten Produkts und anderen Oberflächen, welche mit dem Produkt in Kontakt kommen, verhindert oder zumindest erschwert. Beispielsweise sind bekannte Komponenten von Prozesshilfsmitteln, beispielsweise von Entformungsmitteln, anorganische Bestandteile wie Silikate, insbesondere Schichtsilikate, und/oder Kreide, die insbesondere in pulverförmigen oder zumindest Pulver umfassenden Prozesshilfsmitteln zum Einsatz kommen. Sie fungieren als eine Art mechanischer Abstandshalter. Die betreffenden Oberflächen, welche ein solches Prozesshilfsmittel aufweisen, gleich wie dies vorliegt, reagieren vorzugsweise nur in der Art und Weise mit diesen Oberflächen und/oder dem betreffenden Material, insbesondere also einem Polymer, dass die physikalischen Eigenschaften des Materials, insbesondere des Polymers, nicht verändert werden. Sofern diese physikalischen Eigenschaften doch beeinflusst werden, geschieht dies möglichst so, , dass eine einfache Trennung beispielsweise eines Produkts aus einer Form sichergestellt ist und/oder das Anhaften von Oberflächen, beispielsweise von Polymeroberflächen, wie Gummioberflächen, aneinander verhindert werden kann. Mit anderen Worten beeinflusst das Prozesshilfsmittel vorzugsweise die physikalischen Eigenschaften des Materials, vorzugsweise des Polymers, insbesondere eines sogenannten "Gummis", mit welchem es in Kontakt tritt und/oder auf welche es aufgebracht ist und/oder in das es eingebaut ist, nur in der Art und Weise, dass die Oberflächeneigenschaften, insbesondere die Oberflächenenergie und/oder der Reibungskoeffizient, verändert werden, während andere Eigenschaften unverändert bleiben.

Im Rahmen der vorliegenden Offenbarung wird unter einem Pulver eine Darreichungsform verstanden, die im Wesentlichen, also zu vorzugsweise mindestens 60 Gew.-%, oder auch zu bevorzugt wenigstens 90 Gew.-% oder sogar mehr oder vollständig, aus Partikeln aufgebaut ist, wobei der Begriff des Partikels im Sinne der Offenbarung auch Aggregate und Agglomerate umfasst. Als Pulverkomponente werden anorganische Phasen sowie organische Phasen oder Gemische aus organischen und anorganischen Phasen bezeichnet, die vorzugsweise in partikulärer Form vorliegen. Eine Pulverkomponente aus anorganischen Phasen oder einer anorganischen Phase wird im Rahmen der Offenbarung auch als Trennkörperelement, welches auf einer anorganischen Phase beruht und als Pulverkomponente zugegeben werden kann, bezeichnet. Es kann sich dabei insbesondere um Schichtsilikate handeln.

Das Prozesshilfsmittel, beispielsweise ein Prozesshilfsmittel umfassend ein Trennkörperelement, welches auf einer anorganischen Phase beruht, wird üblicherweise in Form einer Dispersion oder Suspension, beispielsweise einer grobdispersen Dispersion oder einer feinen Suspension, verwendet und beispielsweise auf eine Form oder auf die Oberfläche eines erzeugten Produkts aufgebracht. Dies ist insbesondere dann der Fall, wenn von einem Trennfilm gesprochen wird. Es ist aber auch möglich, je nach genauer Ausgestaltung des Prozesses bzw. des erzeugten Produkts, dass Teile des Prozesshilfsmittels in die Oberfläche des Produkts eingebaut werden können oder in dieses zumindest bereichsweise eingemischt werden. Auch kann es sein, dass das Prozesshilfsmittel zunächst in Form eines Films (oder einer Beschichtung) auf eine Oberfläche aufgebracht wird, auf dieser aber verbleibt und dann auch bei Weiterverarbeitungsschritten weiter anwesend ist und auf diese Weise im Produkt verbleibt bzw. in dieses eingemischt wird. Ebenso ist es möglich und aus dem Stand der Technik bekannt, dass im Falle eines Trennfilms, d.h. einem als eine Beschichtung vorliegenden Trennmittels, dieser Film bzw. dieses Trennmittel so aufgebracht wurde, dass es seine gewünschte Wirkung erzielt aber bedingt durch den weiteren und nachgelagerten Verarbeitungsprozess wieder bei Bedarf von der Oberfläche entfernt wird. Dies kann beispielsweise durch ein Abwaschen mittels Wasser geschehen.

Gleichzeitig weisen solche Prozesshilfsmittel umfassend ein Trennkörperelement, welches auf einer anorganischen Phase beruht, den Vorteil auf, dass das Trennkörperelement, welches auf einer anorganischen Phase beruht, insbesondere, wenn es sich um ein Silikat, beispielsweise ein Schichtsilikat, handelt, noch weitere Funktionen übernehmen können. Beispielsweise werden Prozesshilfsmittel, welche ein solches Trennkörperelement umfassen, in der Regel in der Form eines Pulvers ausgeliefert werden, wobei dann häufig von einer Lieferform mit 100% Aktivsubstanz (AS) im Anlieferungszustand gesprochen wird. Diese Pulver müssen allerdings vor Anwendung mit bestimmten Mengen einer Flüssigkeit, vorzugsweise von Wasser, vermischt werden, um anschließend die resultierende Dispersion auf die Oberfläche entweder des erzeugten Produkts, der Form oder auf beides aufzubringen. In dieser Dispersion bzw., je nach Ausführung, Suspension kann die Pulverkomponente noch als Mittel fungieren, welches die Separation von flüssiger Phase und festen Komponenten verhindert oder zumindest mindert, wirkt also auch noch als Mittel zur Verhinderung des Absetzens und/oder allgemein der Phasentrennung der Komponenten der Dispersion/Suspension. Allerdings ist es dazu zumeist notwendig, dass die Dispersion/Suspension eine gewisse Zeit quellen kann, wobei gilt, dass je länger die Quellzeit ist, umso besser ist auch die Wirkung der zumeist silikatischen Feststoffkomponente als Mittel gegen Phasenseparation und/oder Absetzen. Dieser Zusammenhang gilt bis zu dem Zeitpunkt, ab dem die quellfähigen Komponenten der Dispersion/Suspension ihr maximales, spezifisches Quellvermögen erreicht haben.

Auch wenn ein solches Prozesshilfsmittel vorteilhaft sein kann, insbesondere, weil das Trennkörperelement, welches auf einer anorganischen Phase beruht, mit den organischen Bestandteilen beispielsweise des Produkts aus oder umfassend ein Polymer, beispielsweise einem Gummi/Kautschuk, nur sehr wenig, wenn überhaupt, reagiert, können solche Prozesshilfsmittel umfassend pulverförmige, insbesondere anorganische Zusätze, beispielsweise Silikate, insbesondere Schichtsilikate, nachteilig sein.

Beispielsweise kann nicht immer ausgeschlossen werden, dass diese pulverförmigen Komponenten nicht doch unerwünschte Silikatphasen aufweisen, beispielsweise lungengängiges SiO₂ oder ähnlich gesundheitlich bedenkliche Komponenten, oder alternativ oder zusätzlich auch sogenannte "Gummi-Gifte", wie beispielsweise Cu und/oder Fe³⁺ oder Stoffe, die aus Umweltgründen ungünstig sind, wie beispielsweise Barium. Weiterhin ist es bei unsachgemäßer Anwendung möglich, dass sich Prozesshilfsmittel umfassend eine Pulverkomponente nur unregelmäßig auftragen lassen, sodass der aufgebrachte Trennfilm nach dem Eintrocknen zu Agglomeraten führt, die, insbesondere, wenn diese sich im Wesentlichen aus den anorganischen Komponenten zusammensetzen, auch sehr harte Rückstände bilden können, welche sich auch nur schwer entfernen lassen können. Wird ein solches Prozesshilfsmittel umfassend eine Pulverkomponente nach unsachgemäßer Anwendung des Prozesshilfsmittels teilweise im Produkt selbst eingebaut, also insbesondere die anorganische Komponente, kann es dazu führen, dass sich durch solche gegebenenfalls harten Rückstände im Produkt selbst, aber auch ggf. an der Oberfläche des Produkts, unerwünscht Fehlstellen bilden können. Alternativ oder zusätzlich können sich, eine unsachgemäße Anwendung vorausgesetzt, solche Rückstände auch an Bauteilen der Produktionsanlagen bilden, beispielsweise in einer Form, die ebenfalls zu hartnäckigen Anhaftungen führen kann .

Es kann daher auch vorteilhaft sein, flüssige Prozesshilfsmittel, wie beispielsweise ein Entformungs- oder Trennmittel, und/oder Formulierungen zu verwenden. Diese weisen zwar eine deutlich geringere Konzentration an Aktivsubstanz im Anlieferungszustand auf im Vergleich mit Prozesshilfsmitteln, welche wenigstens eine Pulverkomponente umfassen, aber erfordern für die Verwendung nur einen spezifischen Verdünnungsschritt und keine weitere spezielle Aufbereitung wie beispielsweise Quellzeiten, wie sie oben für Prozesshilfsmittel, welche vorzugsweise ein Trennkörperelement, welches auf einer anorganischen Phase beruht, umfassen, beschrieben wurden. Wichtiger Bestandteil dieser flüssigen Prozesshilfsmittel sind Metallseifen. Diese Metallseifen wirken als Trennkörper bzw. Abstandshalter, indem sie an der Oberfläche beispielsweise von Produkten aus oder umfassend Gummimischungen und/oder aus oder umfassend sonstige Polymere anhaften und auf diese Weise das Anhaften der Produkte aneinander oder an Formen verhindern. Dabei besteht allerdings Bedarf an solchen Prozesshilfsmitteln, welche auf möglichst umweltschonende Weise hergestellt werden können, beispielsweise unter Einsatz eines nachwachsenden Rohstoffs.

Nachteile der Prozesshilfsmittel des Standes der Technik bestehen also teilweise in der Performance derselben, beispielsweise in der Bildung von Rückständen auf dem erzeugten Produkt und/oder ggf. von Formen, welche zu deren Herstellung verwendet werden. Dies betrifft gerade solche Mittel, welche allerdings besonders umweltfreundlich, also mit besonders hoher Konzentration an Aktivsubstanz (im Rahmen der Offenbarung auch abgekürzt als "AS") beispielsweise transportiert werden können. Nachteilig kann hier auch sein, dass pulverförmige Prozesshilfsmittel zur Staubbildung neigen können und damit auch unter gesundheitlichen Gesichtspunkten ungünstig sein können. Zudem stellt die Aufbereitung dieser Mittel vor der Verwendung, also das Dispergieren/Suspendieren und ggf. Quellen, einen zusätzlichen Aufwand dar. Flüssige Prozesshilfsmittel und/oder Formulierungen, also Formulierungen mit einem hohen Wassergehalt von beispielsweise mehr als 10 Gew.-% Wasser und bis zu 85 Gew.-% Wasser, beispielsweise bis zu 90 Gew.-% Wasser oder sogar bis zu 95 Gew.-% Wasser, jeweils bezogen auf das Gesamtgewicht der Formulierung, weisen diese Nachteile nicht auf, allerdings ist die Konzentration an Aktivsubstanz in diesen in der Regel deutlich geringer, was unter beispielsweise Umweltgesichtspunkten aber ungünstig ist. Denn auf diese Weise wird Gewicht einer Komponente transportiert, welche für die Performance des Prozesshilfsmittels nur von untergeordneter Bedeutung ist.

Gleichzeitig ist zu berücksichtigen, dass das Prozesshilfsmittel nach der vorliegenden Offenbarung, also ein solches, welches insbesondere eine Trennwirkung aufweist, nur eines der Prozesshilfsmittel darstellt, welches allgemein in der Herstellung von Polymeren, insbesondere organischen Polymeren, zum Einsatz kommt. Wichtig ist daher, wie auch vorstehend zum Stand der Technik bereits diskutiert, dass das verwendete Prozesshilfsmittel die Eigenschaften des zu erzeugenden Produkts nicht beeinflusst, vorzugsweise rückstandsfrei entfernbar ist und/oder in das Produkt eingearbeitet werden kann oder zumindest in Teilen im zu erzeugenden Produkt vorliegen kann, ohne dass es zu Einbußen der Performance und/oder Eigenschaftsänderungen des zu erzeugenden bzw. erzeugten Polymers kommt. Wenn daher bestehende Prozesshilfsmittel umformuliert werden, so ist dabei sicherzustellen, dass neue Komponenten nicht in den Prozess der Herstellung des eigentlichen Produkts eingreifen, sondern gegenüber den Eigenschaften des zu erzeugenden Produktes, bei dem es sich vorzugsweise um ein Polymer handelt, inert sind.

Nachteilig ist es häufig auch, wenn vorgefertigte Prozesshilfsmittel an den jeweiligen Endanwender versandt werden. Denn, wie vorstehend ausgeführt können, sich fertige Prozesshilfsmittel beispielsweise absetzen oder es ist nachteilig, dass lediglich ein geringer Prozentsatz an "Aktivsubstanz" verschickt wird. Zudem werden unterschiedliche Anwender in der Regel unterschiedliche Prozesse zur Verwendung eines Prozesshilfsmittels in den jeweiligen Prozessen implementiert haben, sodass damit ein Bedarf daran besteht, ein Prozesshilfsmittel bereitzustellen, welches flexibel an die Bedürfnisse der Endanwender anpassbar ist.

Es besteht damit ein Bedarf an verbesserten Prozesshilfsmitteln, insbesondere eine Trennwirkung aufweisenden Prozesshilfsmitteln, welche nicht zur Bildung von Rückständen neigen, unter Gesundheitsaspekten vorteilhaft sind und dennoch eine möglichst umweltschonende Verwendung ermöglichen, vorzugsweise ohne dass es dabei zu Änderungen in den Produkteigenschaften des mittels des Prozesshilfsmittels hergestellten Produkts kommt.

### Aufgabe der Erfindung

Die Aufgabe der Erfindung besteht in der Bereitstellung einer Formulierung für die Herstellung eines Prozesshilfsmittels, welche die vorgenannten Schwächen des Standes der Technik mindert oder zumindest mildert und/oder wenigstens teilweise überwindet. Weitere Aspekte betreffen ein Verfahren zur Herstellung eines Prozesshilfsmittels aus der Formulierung sowie das Prozesshilfsmittel selbst.

### Zusammenfassung der Erfindung

Die Aufgabe der Erfindung wird gelöst durch den Gegenstand der unabhängigen Ansprüche. Bevorzugte und spezielle Ausführungsformen finden sich in der Beschreibung, den Zeichnungen und den abhängigen Ansprüchen der Offenbarung.

Die vorliegende Offenbarung betrifft damit allgemein eine Formulierung für die Herstellung eines Prozesshilfsmittels. Die Formulierung wird vorzugsweise in Pulverform bereitgestellt und kann insbesondere vom Endanwender einfach in ein Prozesshilfsmittel überführt werden. Vorzugsweise kann mittels der Formulierung ein wässriges Prozesshilfsmittel erhalten werden, also eines, welches als flüssige Komponente Wasser umfasst. Die Formulierung umfasst ein Biopolymer, vorzugsweise ein Lignin und/oder ein Lignin-Derivat, besonders bevorzugt ein Lignin-Sulfonat, und wenigstens ein Tensid und/oder eine Abmischung von wenigstens zwei Tensiden.

Unter einer Formulierung (auch: "Zubereitung") wird im Rahmen der vorliegenden Offenbarung ein Stoffgemisch verstanden, welches durch die Zugabe wenigstens einer weiteren Komponente, vorzugsweise einer flüssigen Komponente, insbesondere einer wässrigen Komponente, in ein Prozesshilfsmittel überführt werden kann. Es stellt also bei der Herstellung eines Prozesshilfsmittels mithin eine Art "Zwischenprodukt" oder "Halbzeug" dar.

Das Prozesshilfsmittel wird vornehmlich bei der Herstellung und/oder Weiterverarbeitung von organischen Polymeren, wie beispielsweise Gummimischungen, Elastomeren oder sonstigen Polymeren, verwendet. Sofern im Rahmen der Offenbarung von Polymeren gesprochen wird, sind darunter insbesondere organische Polymere zu verstehen, wobei auch Polymere umfassend Silikone bzw. Organopolysiloxane (welche auch als Silikonkautschuk oder Silikonelastomere genannt werden) vom Begriff des organischen Polymers umfasst sein können.

Im Rahmen der vorliegenden Offenbarung wird allgemein verstanden, dass sich das Prozesshilfsmittel und die Formulierung im Wesentlichen in der Konzentration der Aktivsubstanz unterscheiden. Insbesondere kann die Formulierung in Pulverform vorliegen und das Prozesshilfsmittel in Form einer Dispersion/Suspension. Sofern im Rahmen der Offenbarung auf die Formulierung abgestellt wird, gelten die Aussagen in entsprechender Weise auch für das Prozesshilfsmittel und umgekehrt, sofern sich nicht aus dem Kontext ausdrücklich etwas anderes ergibt, wie dies beispielsweise bei der Applikation eines Trennmittelfilms und dessen Wirkung der Fall ist, die sich explizit auf das Prozesshilfsmittel beziehen und nicht auf die Formulierung. Sofern auf die Komponenten und deren Gehalte abgestellt wird, wird verstanden, dass sich diese auf den Gehalt an Aktivsubstanz des Prozesshilfsmittels (also ohne zusätzliche flüssige, insbesondere wässrige, Phase) beziehen. Entsprechendes gilt auch für die Formulierung selbst, die im Idealfall rein aus Aktivsubstanz aufgebaut ist und ggf. nur kleinere Mengen beispielsweise adsorptiv gebundene Flüssigkeit umfasst, wie absorbiertes Wasser. D.h. die Angabe der Komponenten in der Formulierung bezieht sich auf die Aktivsubstanz, üblicherweise angegeben als Gew.-%, bezogen auf den Gehalt an Aktivsubstanz, welche durch die Komponenten Additiv(e) (sofern vorhanden), Metallseife(n) (darunter wasserlösliche Seifen und/oder wasserunlösliche Metallseifen, je nach genauer Zusammensetzung der entsprechenden Formulierung und sofern vorhanden), Tensid(e), Biopolymer und ggf. Trennkörperlement(e) gebildet wird. Notwendige Bestandteile der Aktivsubstanz im Rahmen der Offenbarung sind dabei lediglich wenigstens ein Tensid und ein Biopolymer.

Unter einem Biopolymer wird im Rahmen der vorliegenden Offenbarung ein natürlich vorkommendes, vorzugsweise aus Pflanzenbestandteilen extrahiertes oder extrahierbares organisches Polymer oder ein Derivat eines solchen verstanden. Insbesondere werden im Rahmen der Offenbarung Lignin sowie Lignin-Derivate, insbesondere Lignin-Sulfonat(e), im Rahmen der vorliegenden Offenbarung als Biopolymer(e) bezeichnet.

Bei einem Biopolymer im Sinne dieser Offenbarung handelt es sich, wie vorstehend diskutiert, also vorzugsweise um einen nachwachsenden, natürlichen Rohstoff, der beispielsweise im Falle einer Ausgestaltung des Biopolymers aus oder umfassend Lignin oder einem Lignin-Derivat, wie beispielsweise einem Lignin-Sulfonat, aus Holzabfällen gewonnen werden kann.

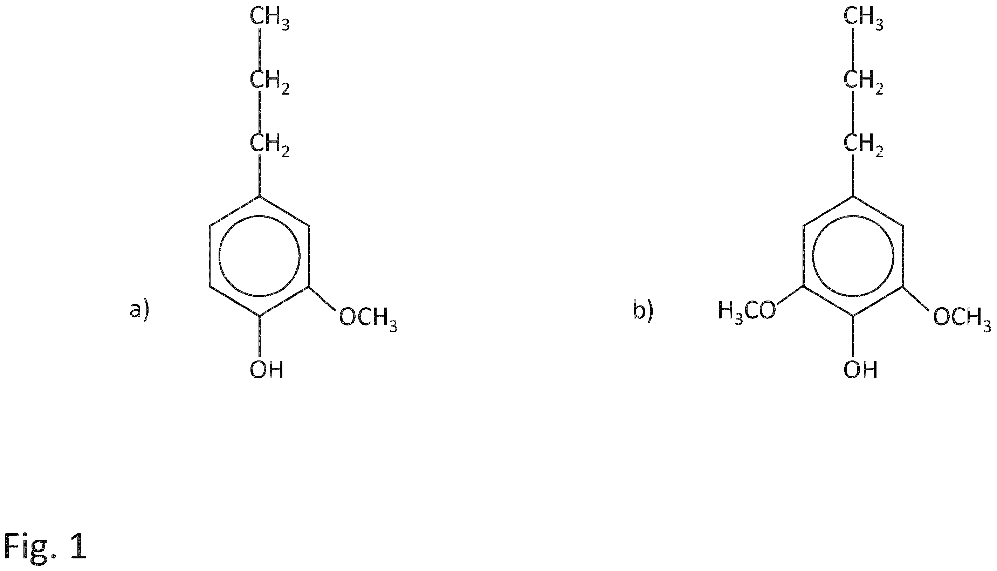

Lignin bezeichnet allgemein einen amorphen, harzartigen Stoff, welcher in der Natur als Bestandteil von Holz vorkommt, teilweise auch in Gräsern oder krautigen Pflanzen, wenn auch in geringerem Maße. Chemisch kann es beschrieben werden als ein Biopolymer und letztlich als Sammelbegriff für eine Reihe von Makromolekülen, welche ein Bestandteil der pflanzlichen Zellwand, insbesondere von Bäumen, sind. Die Makromoleküle haben Molekülmassen bis zu 11000, insbesondere zwischen 5000 und 10000 (was in etwa einer Molmasse zwischen 5000 g/mol und 10000 g/mol entspricht) und umfassen Phenylpropaneinheiten, von denen zwei besonders relevante in Fig. 1 beispielhaft dargestellt sind. Diese Phenylpropaneinheiten können über Etherbrücken, aber auch direkt über Kohlenstoffatome miteinander verbunden sein. Mögliche Substituenten des Benzolrings der Struktur können übliche Gruppen, wie eine oder mehrere Hydroxylgruppen, eine oder mehrere Methoxygruppen, Restketten, beispielsweise Alkoxyketten, und dergleichen sein. Lignin fällt beispielsweise bei der technischen Gewinnung von Cellulose aus Holz als Rest an.

Weiterhin allgemein wird unter einem Lignin-Sulfonat oder Ligninsulfonat ein Salz der Ligninsulfonsäure verstanden. Ligninsulfonsäure selbst ist ein Derivat von Lignin und kann insbesondere durch die Umsetzung von Lignin mit schwefliger Säure HSO₃ erhalten werden. Lignin-Sulfonat ist wie auch Lignin selbst letztlich nicht chemisch genau definiert.

Trotz der Unsicherheit der genauen chemischen Zusammensetzung dieses Biopolymers findet Lignin sowie seine Derivate Einsatz in der Industrie und ist dem Fachmann daher als solches bekannt.

Unter einem Tensid wird im Rahmen der vorliegenden Offenbarung eine Substanz verstanden, welche allgemein die Oberflächenspannung einer Flüssigkeit oder - allgemeiner - die Grenzflächenspannung zwischen zwei Phasen herabsetzt. In der Regel handelt es sich dabei um organische Moleküle, welche einen hydrophoben und einen hydrophilen Bestandteil aufweisen. der hydrophobe Teil ist dabei oft ein Kohlenwasserstoffrest, beispielsweise eine lange Alkylkette, und ist allgemein nicht-polar oder unpolar; der hydrophile Teil ist allgemein polar und kann beispielsweise ionisch sein, was aber nicht zwingend der Fall ist. Beispielsweise kann auch eine Hydroxyl-Gruppe den polaren Teil des Tensids bilden. Vorzugsweise weisen Tenside im Rahmen der Offenbarung eine Molmasse von höchstens 10000 g/mol auf, insbesondere vorzugsweise für den Fall, dass das Tensid und/oder die Abmischung wenigstens zweier Tenside aus anionischen Tensiden ausgebildet ist oder solche umfasst.

Unter einer Metallseife werden im Rahmen der vorliegenden Offenbarung allgemein Salze der Carbonsäuren, demnach auch Salze von Fettsäuren, Harz- und Naphthensäuren, mit Metallen bezeichnet. Metallseifen können in wasserlöslich und wasserunlöslich unterschieden werden. Wasserlösliche Metallseifen werden oft auch nur als Seifen bezeichnet. Das gilt insbesondere für die wasserlöslichen Fettsäuresalze mit Natrium- und Kalium-Ionen.

Unter einer Fettsäure wird allgemein eine zumeist unverzweigte aliphatische Monocarbonsäure verstanden. Harzsäuren sind eine heterogene Gruppe von organischen Säuren, welche beispielsweise in natürlichen Harzen vorkommen. Naphthensäuren werden hier als Carbonsäuren umfassend wenigstens eine Cyclopentan- und/oder Cyclohexangruppe mit wenigstens einem Alkylsubstituenten verstanden. Diese Gruppen von Carbonsäuren können im Rahmen der vorliegenden Offenbarung auch allgemein als "seifenbildende Carbonsäuren" bezeichnet werden.

Unter einer wasserlöslichen Metallseife wird im Rahmen der vorliegenden Offenbarung ein Alkalisalz einer der vorgenannten Carbonsäuren, insbesondere ein Natrium- und/oder Kaliumsalz einer der vorgenannten Carbonsäuren, also beispielsweise einer Fettsäure, verstanden oder eine Mischung dieser Stoffe. Die wasserlösliche Seife kann auch als Alkaliseife bezeichnet werden. Insbesondere umfasst der Begriff der wasserlöslichen Seife ein Natrium- und/oder Kaliumsalz einer Fettsäure, beispielsweise ein Natrium- und/oder Kaliumstearat und/oder ein Natrium- und/oder Kaliumoleat oder Mischungen hiervon.

Vorzugsweise umfasst eine wasserunlösliche Metallseife im Sinne der Offenbarung ein Erdalkalimetall, insbesondere Calcium oder Magnesium.

Stearate gehören zu der Gruppe der Metallseifen und stellen im Rahmen der vorliegenden Offenbarung die Salze von ausgewählten Fettsäuren dar. Unter einem Stearat werden im Rahmen der vorliegenden Offenbarung insbesondere allgemein Salze der Alkansäuren Margarinsäure, Palmitinsäure und/oder Stearinsäure verstanden. Ein Stearat umfasst somit ein Salz der Hexadecansäure (n-Hexadecansäure) und/oder der Heptadecansäure (n-Heptadecansäure) und/oder der Octadecansäure (n-Octadecansäure) und/oder deren Mischungen. Vorzugsweise enthält ein Stearat im Sinne der Offenbarung als Hauptbestandteil ein Salz der Octadecansäure, wobei verstanden wird, dass wenigstens 10 Gew.-%, vorzugsweise wenigstens 20 Gew.-% und vorzugsweise mehr als 50 Gew.-% des Stearats als Salz der Octadecansäure ausgebildet ist. Zumeist findet die im Stearat enthaltenen Alkansäuren in Kombination mit unterschiedlichen Metallen wie Calcium, Zink, Magnesium, Natrium, Aluminium und Lithium Einsatz. Dann spricht man unter anderem von Calciumstearat, Zinkstearat, Magnesiumstearat, Natriumstearat, Aluminiumstearat und Lithiumstearat. Calciumstearat in technischer Qualität kann neben Calciumstearat häufig auch andere Calciumsalze von höheren Fettsäuren, zum Beispiel Calciumpalmitat, enthalten. Dies gilt in entsprechender Weise auch für die weiteren Metallstearate.

Die Formulierung nach der Offenbarung, also umfassend ein Biopolymer, und wenigstens ein Tensid oder eine Abmischung von wenigstens zwei Tensiden, weist eine Reihe von Vorteilen auf. Zum einen ist mit einer solchen Formulierung, die als versandfertiges Produkt ausgeliefert werden kann, auf sehr einfache Weise dazu geeignet, reproduzierbar von einem Endanwender und angepasst an dessen jeweilige Bedürfnisse, in ein Prozesshilfsmittel, vorzugsweise ein wässriges Prozesshilfsmittel, überführt zu werden. Dabei kann die Formulierung zweckmäßig als Feststoff, insbesondere als pulverförmiger Feststoff, versandt werden. Alterungsprozesse wie beispielsweise das Absetzen von Feststoffbestandteilen, beispielsweise in einer Dispersion oder Suspension, treten damit nicht auf. Der Endanwender ist damit flexibel in der Einstellung der Wunsch- bzw. Verarbeitungsviskosität des Prozesshilfsmittels, die er entsprechend seiner Prozesse und verwendeten Maschinen selbst einstellen kann. Aber auch sonst weisen Formulierung und resultierendes Prozesshilfsmittel gegenüber dem Stand der Technik eine Reihe von Vorteilen auf.

Wie ausgeführt, wird die Formulierung vorzugsweise in Pulver- und/oder in Granulatform bereitgestellt und kann auf einfache Weise in ein flüssiges Prozesshilfsmittel (als Dispersion/Suspension) überführt werden. Mit anderen Worten liegt die Formulierung vorzugsweise als Pulver und/oder Granulat vor und umfasst damit in dieser bevorzugten Ausführungsform 100% Aktivsubstanz, ist aber gleichzeitig sehr leicht in den flüssigen Anwendungszustand überführbar. Unter flüssig wird hierbei insbesondere auch das Vorliegen in einer Dispersion oder Suspension verstanden.

Ein besonderer Vorteil ist, dass die Formulierung so zusammengesetzt sein kann, dass auf ein Trennkörperelement, welches auf einer anorganischen Phase beruht, verzichtet werden kann. In diesem Fall ist es dann beim Überführen in ein Prozesshilfsmittel durch Zugabe einer Flüssigkeit, vorzugsweise von Wasser bzw. einer wässrigen Flüssigkeit, nicht notwendig, dass die Suspension/Dispersion "quillt". Das Prozesshilfsmittel bzw. die Formulierung nach Ausführungsformen der Offenbarung ist damit wesentlich anwenderfreundlicher. In seiner einfachsten Form umfasst sie, wie ausgeführt, lediglich ein Biopolymer, beispielsweise ein Lignin und/oder ein Lignin-Derivat, besonders bevorzugt ein Lignin-Sulfonat, und wenigstens ein Tensid und/oder eine Abmischung von wenigstens zwei Tensiden. Entsprechend liegt das resultierende Prozesshilfsmittel in vorzugsweise wässriger Phase, sei es als Dispersion, Suspension oder als Lösung, vor, umfassend als Aktivsubstanz eben lediglich ein Biopolymer, wie ein Lignin und/oder ein Lignin-Derivat, beispielsweise Lignin-Sulfonat, und wenigstens ein Tensid und/oder eine Abmischung von wenigstens zwei Tensiden. Allgemein kann das Prozesshilfsmittel nach Ausführungsformen also verstanden und/oder beschrieben werden als Wasser und Aktivsubstanz umfassend, wobei die Aktivsubstanz allgemein wasserlösliche und/oder wasserunlösliche Bestandteile umfassen kann. Hierfür wird im Nachfolgenden vereinfachend allgemein der Begriff "Dispersion" gewählt, wobei wie ausgeführt das vorstehend beschriebene Substanzgemisch verstanden wird. Obwohl die einfachste Form des Prozesshilfsmittels nach Ausführungsformen wie ausgeführt lediglich ein Biopolymer und ein Tensid und/oder eine Abmischung von wenigstens zwei Tensiden als Aktivsubstanz umfasst, kann es die Funktion eines Prozesshilfsmittels ausüben. Überraschenderweise hat sich gezeigt, dass ein geeignetes Biopolymer, wie beispielsweise Lignin und/oder ein Lignin-Derivat, wie beispielsweise Lignin-Sulfonat, die Funktionalität beispielsweise von Silikaten, welche beispielsweise in Prozesshilfsmitteln umfassend ein Trennkörperelement, welches auf einer anorganischen Phase beruht, eingesetzt werden, übernehmen kann. Ein großer Vorteil ist hier, dass mit dem Prozesshilfsmittel bzw. der Formulierung nach der Offenbarung auch bei unsachgemäßer Anwendung keine harten Trockenrückstände erhalten werden. Auch die Exposition mit potentiell gesundheitsgefährdenden Stäuben kann auf diese Weise vorzugsweise vollständig unterbleiben oder zumindest minimiert werden.

Unter einer umweltschonenden Verwendung und/oder einem umweltschonenden Produkt, wie einer Formulierung und/oder einem Prozesshilfsmittel, werden im Rahmen der vorliegenden Offenbarung eine Verwendung bzw. ein Produkt verstanden, die bzw. das im Vergleich zu herkömmlichen Prozessen eine Verbesserung eines Prozesses unter Nachhaltigkeitsgesichtspunkten insbesondere im Hinblick auf Ressourcenschonung mit sich bringt, beispielsweise ein geringeres Versandgewicht (weniger CO₂-Freisetzung beim Versand pro Einheit eingesetzter Aktivsubstanz bzw. pro Einheit eingesetzten Prozesshilfsmittels) und/oder die Verwendung von nachwachsenden Rohstoffen im Prozesshilfsmittel/in der Formulierung und/oder eine bessere Umweltverträglichkeit im Abbau des Produkts und/oder o.ä. Insbesondere wird es unter der Ermöglichung einer umweltschonenden oder umweltschonenderen Verwendung verstanden, wenn ein Prozesshilfsmittel bzw. eine Formulierung zu dessen Herstellung verwendet werden kann, welches einen nachwachsenden, natürlichen (oder natürlich vorkommenden) Rohstoff, wie beispielsweise ein Biopolymer, umfasst.

Dies wird vorliegend insbesondere damit möglich, dass es sich bei Lignin-Sulfonat, wie auch vorstehend ausgeführt, um ein Biopolymer, also um einen nachwachsenden, natürlichen Rohstoff, der beispielsweise aus Holzabfällen gewonnen werden kann, handelt. Demzufolge ist ein Lignin-haltiges Prozesshilfsmittel, beispielsweise ein Entformungsmittel, vorzugsweise vollständig biologisch abbaubar, zumindest bei speziellen Ausführungsformen. Dies ist insbesondere auch im Falle der Anwendung eines Prozesshilfsmittels für eine Gummi-Mischung, die zu einem Fahrzeugreifen verbaut wird, dann relevant, wenn die Abbaubarkeit auch von Reifenabrieb im Vordergrund steht. In diesem Fall bleibt nichts von dem Prozesshilfsmittel zurück.

Ein weiterer Vorteil der Verwendung eines Biopolymers, insbesondere von Lignin und/oder einem oder mehrere Lignin-Derivaten, beispielsweise von Lignin-Sulfonat, ist, dass ein solches Biopolymer, gerade im Falle eines Lignin-haltigen oder Lignin-basierten Biopolymers, kostengünstig verfügbar sein kann, da es beispielsweise als Rückstand bei bestimmten Arbeitsprozessen der Holzverarbeitung anfällt. Es ist insbesondere auch möglich, solche Rückstände zumindest teilweise in einem Prozesshilfsmittel bzw. einer Formulierung zur Herstellung eines Prozesshilfsmittsl nach Ausführungsformen der Offenbarung zu verwenden. Ein Biopolymer aus oder umfassend Lignin und/oder wenigstens ein Lignin-Derivat, wie beispielsweise Lignin-Sulfonat, ist in der Formulierung bzw. dem Prozesshilfsmittel nach Ausführungsformen insbesondere auch deswegen vorteilhaft, weil Lignin bzw. Lignin-Derivate, wie beispielsweise Lignin-Sulfonat, gewisse tensidische Eigenschaften aufweisen, also die Oberflächenspannung des resultierenden Prozesshilfsmittels vorteilhaft senken, was einen attraktiven Nebeneffekt der Verwendung von Lignin bzw. eines Lignin-Derivats, wie beispielsweise Lignin-Sulfonat, darstellt.

Es hat sich allerdings gezeigt, dass das Biopolymer alleine, auch nicht in Form eines Lignin-basierten Biopolymers, also aus oder umfassend Lignin und/oder ein Lignin-Derivat, beispielsweise aus oder umfassend Lignin-Sulfonat, d.h. als einzige Aktivsubstanz eines Prozesshilfsmittels bzw. als alleiniger Bestandteil einer Formulierung zur Herstellung einer solchen Prozesshilfsmittels, nicht funktioniert, d.h. eine einfache Belegung beispielsweise einer Gummi- oder Polymeroberfläche oder allgemeiner einer Oberfläche eines organischen Polymers mit einem Biopolymer-Pulver oder mit einer wässrigen Lösung eines Biopolymers, auch in Form eines Biopolymers, das wie vorstehend Lignin-basiert ausgebildet ist, also Lignin und/oder wenigstens ein Lignin-Derivat, beispielsweise Lignin-Sulfonat, umfasst, bildet keinen Film bzw. keine Schicht, die zu einer zufriedenstellenden Trennwirkung führt. Allerdings hat sich gezeigt, dass dies möglich ist, wenn eine gewisse Menge an Tensid zum Biopolymer zugegeben wird. Daher umfasst die Formulierung neben einem Biopolymer, vorzugsweise Lignin und/oder ein Lignin-Derivat, besonders bevorzugt ein Lignin-Sulfonat, noch wenigstens ein Tensid und/oder eine Abmischung von wenigstens zwei Tensiden.

Die Erfinder vermuten, dass dies daran liegt, dass das Biopolymer, beispielsweise ausgestaltet als Lignin bzw. beispielsweise als Derivat Lignin-Sulfonat, umso hydrophober ist, je größer seine molare Masse ist, wodurch der tensidische Charakter, den Lignin-Sulfonat im Prozesshilfsmittel hat, nicht ausreicht, um die gewünschten Oberflächen zu benetzen. Somit erscheint eine gewisse Menge Tensid zusätzlich zum Biopolymer notwendig, um sicherzustellen, dass der Kontakt des Biopolymer-Moleküls, beispielsweise vorliegend in Form eines Lignin-Sulfonat-Moleküls bzw. mehrere Biopolymer Moleküle, wie beispielsweise Lignin-Sulfonat-Moleküle, zur jeweiligen Oberfläche, zwischen denen der Trennfilm trennen soll, gewährleistet werden kann.

Überraschenderweise hat sich dabei gezeigt, dass aus einer Wechselwirkung von Biopolymer, insbesondere, wenn dies in Form eines Lignins und/oder Lignin-Derivats, wie beispielsweise eines Lignin-Sulfonats, vorliegt, und Stearat ein flexibler Film entsteht, der sich aus einem Teil hoher Gleitwirkung (Stearat) und einem stabilisierenden, vermutlich ein in sich zusammenhängendes Gewebe bildenden Teil (Biopolymer, beispielsweise Lignin und/oder Lignin-Derivat) aufbaut. Dies geschieht im Falle des Vorliegens des Biopolymers als Lignin-basiertes Biopolymer (also umfassend Lignin und/oder wenigstens ein Lignin-Derivat, beispielsweise Lignin-Sulfonat) überraschenderweise bei der Anwesenheit von Stearat und Tensid unabhängig davon, aus welcher natürlichen Quelle - Softwood oder Hardwood - das Lignin stammt. Die Funktionalität des aus der Formulierung resultierenden Prozesshilfsmittels ist davon unabhängig in diesem Fall sehr hoch.

Insbesondere die Verwendung von Lignin-Sulfonat ist dabei zu bevorzugen. Mit anderen Worten ist allgemein das Biopolymer nach einer Ausführungsform der Offenbarung so ausgestaltet, dass es vorzugsweise Lignin-Sulfonat umfasst oder aus Lignin-Sulfonat ausgebildet ist.

Von Lignin-Sulfonaten weiß man, dass sie in einem gewissen Maße in der Lage sind, Oberflächen- und Grenzflächenspannungen zu beeinflussen, insbesondere zu reduzieren. Daher sind Lignin-Sulfonate auch bekannt als bio-basierte sogenannte "surfactants" und Spezial-Chemikalien. Allerdings ist auch bekannt, dass die sogenannte interfacial tension / Grenzflächenenergie bei Lignin-Sulfonaten sehr viel höher ist als die von anderen kommerziell verfügbaren Tensiden.

Allgemein ist bekannt, dass Biopolymere als eine Anordnung von Stuktureinheiten in statistischer Verteilung angesehen werden können und weniger als eine Phase/ein Molekül mit einer fest definierten chemischen Struktur im klassischen Sinne. Dies gilt beispielsweise auch für Lignin bzw. Lignin-Derivate wie Lignin-Sulfonat. Lignin-Sulfonate im Sinne der vorliegenden Offenbarung weisen eine polydisperse Struktur und Molekluargewichte von 1000 - 400.000 g/mol auf. Grundbausteine von Lignin und in entsprechender Weise von Derivaten von Lignin, wie beispielsweise Lignin-Sulfonat, sind beispielhaft in Fig. 1 dargestellt, auf die weiter unten eingegangen wird.

Die nachfolgend beschriebenen Eigenschaften der Lignine bzw. deren Derivaten wie beispielsweise von Lignin-Sulfonat als einem speziellen bevorzugten Beispiel eines Biopolymers, resultieren aus der Vielzahl an sogenannten H-, G-und S-Struktureinheiten, die die funktionellen Gruppen innerhalb beispielsweise einer Lignin-Sulfonat-Zusammensetzung bilden. Diese Struktureinheiten lassen sich in ionisierbare, polare und unpolare Struktureinheiten unterscheiden.

Diese Struktureinheiten und ihre spezifische Anordnung können dann beispielsweise für die Amphiphilie, d.h. die amphiphilen Eigenschaften, oder die anionischen (Sulfonat- und Carboxylgruppe) Eigenschaften verantwortlich sein, während weniger polare Gruppen, d. h. aromatische und aliphatische Reste, die Wechselwirkungen mit Oberflächen und Grenzflächen erleichtern.

Ihre Struktur weist jedoch nicht die eindimensionale "Hydrophiler-Kopf-Hydrophober-Schwanz"-Konfiguration auf, wie sie in einfacheren Tensiden zu finden ist.

Für Anwendungen in wässriger Phase ist im Falle der Ausgestaltung des Biopolymers als aus Lignin-Sulfonat, beispielsweise rein aus Lignin-Sulfonat ausgebildet, ausgebildet oder ein solches umfassend die Hydrophilie der Lignin-Sulfonate wichtig. Die gleichzeitig vorhandene hydrophobe Eigenschaft der Lignin-Sulfonate erleichtert jedoch Wechselwirkungen mit nicht-wässrigen Phasen. In der Literatur ist beschrieben, dass je nach Anwendung das Verhältnis zwischen hydrophober und hydrophiler Eigenschaft eingestellt sein sollte, welches wiederum durch die chemische Zusammensetzung und Struktur bestimmt wird.

Allerdings hat sich im Rahmen der Arbeiten, die der vorliegenden Offenbarung zugrunde liegen, herausgestellt, dass in der Kombination mit einem Tensid und vorzugsweise einem Stearat das Verhältnis aus hydrophober und hydrophiler Eigenschaft beispielsweise eines Lignin-Sulfonats zwar eine hilfreiche, aber eher untergeordnete Rolle für die Funktion eines Prozesshilfsmittels spielt. Auch wenn das Vorhandensein ionischer funktioneller Gruppen von Polymeren im Zusammenhang durch elektrostatische Wechselwirkungen mit den anionischen Gruppen der Lignin-Sulfonate zu so etwas wie einem Anhaften führen könnte, haben die Versuche, die für die vorliegenden Offenbarung durchgeführt wurden, gezeigt, dass ein Tensid-Zusatz zu einem Lignin-Sulfonat erforderlich ist, um letztendlich auch in einer wässrigen Phase eine Affinität und einen auf einer Polymer-, insbesondere einer Gummi-Oberfläche haftenden Trennfilm aus einem Lignin-Sulfonat-haltigen Prozesshilfsmittel nach der Offenbarung zu erzeugen.

Dafür ist nach einer Ausführung der Offenbarung eine resultierende Oberflächenspannung des Prozesshilfsmittels von weniger als 50 mN/m, bevorzugt weniger als 40 mN/m und besonders bevorzugt von weniger als 30 mN/m hilfreich, die insbesondere ohne den Zusatz von Tensid nicht erreicht werden, da beispielsweise wässrige Dispersionen aus bzw. umfassend Lignin-Sulfonat typischerweise eine Oberflächenspannung von 60 mN/m oder mehr aufweisen.

Nur in dem Fall des Vorliegens eines Tensids zum Lignin-Sulfonat, bzw. allgemeiner eines Biopolymers, bildet sich aus den großen und weitverzweigten Lignin-Sulfonat-Molekülen, bzw. allgemeiner den Molekülen des Biopolymers, ein Trennfilm aus, dessen Struktur als geometrische Anordnung Mosaik-artiger Bereiche mit Zwischenbereichen beschrieben werden kann und der daher eine hohe Flexibilität hinsichtlich von Geometrie-Veränderungen des Substrates bei gleichzeitig ausreichender mechanischer Stabilität zum Sicherstellen einer Trennwirkung aufweist.

Insbesondere hat sich gezeigt, dass diese Wirkung besonders vorteilhaft auch für solche Polymermischungen, beispielsweise Elastomermischungen, wie Gummimischungen, denen Schwefelverbindungen als Vernetzer zugegeben worden sind, auftritt und die Prozesshilfsmittel nach der vorliegenden Offenbarung besonders vorteilhaft hier eingesetzt werden können.

Obwohl auch Biopolymere, wie beispielsweise Lignin bzw. seine Derivate, wie beispielsweise allgemein die Lignin-Sulfonate, ebenfalls polymerisch aufgebaut sind und damit theoretisch in die Bildung von Gummi- oder sonstigen Polymerprodukten, wie von Elastomeren, eingreifen bzw. in diese eingebunden werden könnten, hat sich allerdings gezeigt, dass eine Formulierung und letztendlich ein Prozesshilfsmittel nach der Offenbarung nicht zu einer Veränderung der Polymer-Eigenschaften führt. Beispielhaft wurde dies für den Fall der Ausgestaltung des Biopolymers als Lignin-Sulfonat umfassend genauer untersucht. Die typische Struktur des Lignin-Sulfonats, umfasst zwar SO₃⁻-Struktureinheiten, allerdings jeweils so, dass sie eben in den Herstellungsprozess des Elastomers, Gummis bzw. Polymers gerade nicht störend eingreifen, vermutlich insbesondere deshalb, weil die eingesetzte Menge des Prozesshilfsmittels so gering ist, dass ein Übertrag in das entsprechende Elastomer, Gummi bzw. allgemein Polymer für die Ausbildung von dessen relevanten Produkteigenschaften nicht relevant ist. D.h. auf diese Weise ist sichergestellt, dass in allen Weiterverarbeitungsschritten des erzeugten Produkts ein solcher möglicher Übertrag des Prozesshilfsmittels in das erzeugte Produkt dieses als lediglich passives Prozesshilfsmittel fungiert und die Eigenschaften des erzeugten Produkts nicht negativ beeinflusst.

Ein weiterer Vorteil von Prozesshilfsmitteln nach der Offenbarung besteht darin, dass sich gezeigt hat, dass solche Prozesshilfsmittel schneller trocknen, d.h. beispielsweise der gebildete Trennmittelfilm auf dem gebildeten Produkt aus oder umfassend eine Gummimischung und/oder ein sonstiges Polymer schneller trocknet. Die Erfinder gehen davon aus, dass dies daran liegt, dass das Biopolymer, beispielsweise Lignin und/oder ein Derivat eines solchen, wie beispielsweise Lignin-Sulfonat, anders als andere Komponenten von Prozesshilfsmitteln des Standes der Technik, insbesondere solchen, welche eine Trennwirkung aufweisen, kein zusätzliches Wasser aufnimmt. Die Trocknung beispielsweise eines Trennmittelfilms erfolgt allgemein über die Wärme des Produkts aus oder umfassend eine/r Gummimischung und/oder ein/einem sonstiges/sonstigem Polymer. Hier kann das Prozesshilfsmittel nach Ausführungsformen vorteilhaft gerade bei solchen Prozessen zur Herstellung von Produkten aus oder umfassend ein Elastomer, Gummi, eine Gummimischung und/oder ein sonstiges Polymer, eingesetzt werden, welche in eher "kälteren" Prozessen hergestellt werden, da hier dann (kürzere) Trocknungszeiten erzielt werden können, welche bislang bei eher "wärmeren" Prozessen vorkamen.

Lignin bzw. ein Derivat von Lignin als Bestandteil eines Prozesshilfsmittels (in Form eines anoinischen, Lignin-basierten Tensids) ist zwar prinzipiell bekannt. So beschreibt das japanische Patent JP 5579454 B2 beispielhaft, dass ein Lignin-Zusatz zu einem Stearat dazu führt, dass das Stearat in Wasser dispergiert werden kann. Allerdings konnten die Erfinder dies nicht reproduzieren. Weiterhin ist das Prozesshilfsmittel nach JP 5579454 B2 eines basierend auf einem Schichtsilikat, nämlich Montmorillonit, als wesentlicher Komponente, sodass hier möglicherweise andere Mechanismen greifen als nach der vorliegenden Offenbarung. Wie bereits ausgeführt, hat sich nämlich gezeigt, dass Lignin-Sulfonat als solches, zusammen mit einem Tensid, bereits in der Lage ist, eine ausreichende Entformung bzw. allgemein Trennwirkung zu gewährleisten. Nach einer Ausführungsform kann daher allgemein vorgesehen sein, dass das Prozesshilfsmittel bzw. die Formulierung zur Herstellung eines solchen nach der Offenbarung frei von einer Pulverkomponente, insbesondere von einer anorganischen Pulverkomponente, insbesondere frei von einem Silikat, beispielsweise einem Schichtsilikat, ist. Es ist allerdings allgemein möglich, dass das die Formulierung bzw. entsprechend das aus der Formulierung hervorgegangene Prozesshilfsmittel eine pulverförmige, beispielsweise anorganische, Komponente umfasst, wobei diese Ausführung nicht bevorzugt ist. Bevorzugt ist eine Ausführung, bei welcher das Prozesshilfsmittel bzw. die entsprechende Formulierung keine anorganischen Komponenten umfasst, insbesondere also kein Trennkörperelement, welches auf einer anorganischen Phase beruht.

Nach einer Ausführungsform umfasst das Prozesshilfsmittel bzw. die Formulierung zu dessen Herstellung wenigstens eine wasserunlösliche Metallseife, vorzugsweise ein Stearat, besonders bevorzugt ein Stearat wenigstens eines Erdalkalimetalls, vorzugsweise ein Magnesium- und/oder ein Calcium-Stearat oder Mischungen hiervon. Die Bildung beispielsweise eines flexiblen und mobilen Trennfilms gelingt nämlich, wie die Erfinder herausgefunden haben, besonders vorteilhaft in einer solchen Zusammensetzung, sodass die Trennwirkung bzw. die Ausbildung eines gleichmäßigen Trennfilms auf diese Weise besonders einfach möglich ist. Insbesondere zeigt sich, dass in Ausführungen mit einer wasserunlöslichen Metallseife, wie beispielsweise einem Stearat eines Erdalkalimetalls, als Bestandteil des Prozesshilfsmittels bzw. in entsprechender Weise der Formulierung Oberflächen mit besonders hoher Gleitwirkung, also einer besonders geringen Haftreibung der Oberflächen, ausbilden. Es wird vermutet, dass diese Gleitwirkung mit diesem wasserunlöslichen Metallseifen-Bestandteil zusammenhängt bzw. auf diesem beruht oder durch diesen vorteilhaft unterstützt werden kann, wohingegen der Biopolymer-Bestandteil (insbesondere aus oder umfassend Lignin und/oder ein Lignin-derivat, wie beispielsweise Lignin-Sulfonat) ein in sich zusammenhängendes Gewebe bildet, also beispielsweise einem Film aus dem Prozesshilfsmittel Struktur verleiht. Weiterhin zeigt sich gerade in der Kombination der drei genannten Komponenten des vorzugsweise wässrigen Prozesshilfsmittels bzw. in der entsprechenden Formulierung, also hier umfassend ein Biopolymer, vorzugsweise ausgebildet als Lignin-basiertes Biopolymer, beispielsweise umfassend oder aus Lignin-Sulfonat, ein Tensid und wenigstens ein Stearat, dass eine ausgezeichnete Trenn- bzw. ggf. Entformungswirkung erhalten wird. Es scheint, dass damit ein besonders gleichmäßiger, gut haftender, jedoch im Bedarfsfall auch gut abwaschbarer Film erhalten werden kann, der eine gute Trennwirkung aufweist, sodass das Prozesshilfsmittel beispielsweise gut zur Entformung und/oder als Trennmittel eingesetzt werden kann.

Nach einer weiteren Ausführungsform des Prozesshilfsmittels bzw. der Formulierung ist oder umfasst das Biopolymer Lignin-Sulfonat, wobei das Lignin-Sulfonat ein Alkali- und/oder ein Erdalkali-Lignin-Sulfonat ist oder umfasst, wobei unter einem Alkali- und/oder Erdalkali-Lignin-Sulfonat insbesondere verstanden werden ein Natrium-, Calcium-. Magnesium- und/oder Ammonium-Lignin-Sulfonat und/oder Mischungen hiervon, besonders bevorzugt ein Natrium-Lignin-Sulfonat. Hiermit konnten hinsichtlich der Trennwirkung besonders gute Ergebnisse erzielt werden, außerdem kann auf diese Weise ein stabiles Prozesshilfsmittel erhalten werden, welches sich gut auftragen lässt und auch in der Anwendungsform als Dispersion oder Suspension nicht zu Entmischung, also beispielsweise einer Trennung in flüssige Phase und abgesetzten festen Bestandteilen, neigt. Weiterhin sind gerade die Lignin-Sulfonate der genannten Alkali- und Erdalkalimetalle, wobei hier unter den Alkalien auch Ammonium verstanden wird, da dies in der chemischen Analyse zur "Iöslichen Gruppe" gehört wie die Alkalien selbst, sehr gut wasserlöslich und daher hier vor dem Hintergrund der vorher genannten Gründe besonders bevorzugt.

Nach einer Ausführungsform umfasst das Prozesshilfsmittel bzw. die Formulierung zu dessen Herstellung wenigstens 20 Gew.-%, bevorzugt wenigstens 35 Gew.-%, und höchstens 90 Gew.-% eines Biopolymers, bevorzugt von Lignin oder einem Lignin-Derivat, vorzugsweise eines Lignin-Sulfonats, bevorzugt zwischen 50 Gew.-% und 70 Gew.-% eines Biopolymers, bevorzugt von Lignin oder einem Lignin-Derivat, vorzugsweise von Lignin-Sulfonat.

Diese Ausgestaltung ist besonders vorteilhaft, weil auf diese Weise ein möglichst hoher Anteil an nachwachsendem Rohstoff im Prozesshilfsmittel bzw. der entsprechenden Formulierung zur Herstellung des Prozesshilfsmittels enthalten ist, nämlich von wenigstens 20 Gew.-%, vorzugsweise sogar von wenigstens 35 Gew.-%, und bis zu höchstens 90 Gew.-%, eines Biopolymers, bevorzugt von Lignin oder einem Lignin-Derivat, vorzugsweise eines Lignin-Sulfonats, bevorzugt eines Alkali- und/oder Erdalkali-Lignin-Sulfonats im Sinne der Offenbarung, und oder von Mischungen dieser Lignin-Sulfonate. Insbesondere kann das Lignin-Sulfonat Natrium-Lignin-Sulfonat sein oder umfassen. Weitere bevorzugte Grenzen sind mindestens 50 Gew.-% und höchstens 70 Gew.-%.

Lignin-Sulfonat wirkt, wie auch vorstehend bereits ausführlich diskutiert, in einer bevorzugten Ausführungsform als wesentliche Komponente des Prozesshilfsmittels bzw. der entsprechenden Formulierung zu dessen Herstellung und sorgt beispielsweise bei entsprechender Anwendung des Prozesshilfsmittels für die Ausbildung eines stabilen, dabei aber flexiblen Trennfilms auf einem Substrat, wie beispielsweise einer Form und/oder dem Produkt selbst, beispielsweise einem Gummi, einer Gummi-Mischung oder allgemein einem (organischen) Polymer oder Elastomer. Wie ausgeführt, reagiert dabei das Biopolymer selbst, wie beispielsweise Lignin, entweder als solches und/oder in Form eines Derivats, wie Lignin-Sulfonat, nicht mit dem vornehmlich aus organischen Komponenten zusammengesetzten Polymerprodukt, sondern vielmehr kommt es, wenn das Prozesshilfsmittel beispielsweise in Form eines Trennfilms auf das Polymerprodukt aufgebracht wird, mit diesem lediglich zur Ausbildung einer physikalischen Bindung, welche gegebenenfalls, also im Bedarfsfall, leicht wieder lösbar ist. Für den Fall, dass Komponenten des Prozesshilfsmittels bzw. der Formulierung in das Polymerprodukt übertragen werden, ist das Prozesshilfsmittel allerdings, wie auch vorstehend bereits diskutiert, in einem so geringen Anteil enthalten und auch dadurch so inert, dass es zu keiner Beeinflussung der Eigenschaften des Polymerprodukts kommt, dieses also wie gewohnt verarbeitet und weiterverarbeitet werden kann. Um allgemein, unabhängig von der genauen Anwendung, zu einer ausreichenden Trennwirkung zu kommen, sollte der Anteil des Biopolymers, beispielsweise von Lignin oder einem Lignin-Derivat, wie nach einer bevorzugten Ausführungsform Lignin-Sulfonat, am Prozesshilfsmittel bzw. der entsprechenden Formulierung zu dessen Herstellung daher wenigstens 20 Gew.-% betragen. Vorteilhaft beträgt der Anteil wenigstens 35 Gew.-%, beispielsweise wenigstens 50 Gew.-%.

Es kann allerdings auch vorteilhaft sein, den Anteil des Biopolymers, beispielsweise eines Lignin-Sulfonats und/oder eines Lignins oder sonstigen Lignin-Derivats, nicht zu hoch zu wählen. Insbesondere sollte der Anteil vorzugsweise höchstens 90 Gew.-% betragen. Zwar hat sich gezeigt, dass das Biopolymer, wie beispielsweise Lignin-Sulfonat bzw. allgemein Lignin und/oder eines von dessen Derivaten, als solches weder selbst noch in Form eines Derivats in den Herstellungsprozess der zu trennenden Produkte eingreift. Allerdings hat sich, wie ebenfalls vorstehend bereits ausgeführt wurde, gezeigt, dass ein Biopolymer, beispielhaft Lignin-Sulfonat, als alleinige Aktivsubstanz nicht ausreicht, sondern vielmehr wenigstens eine weitere Komponente vom Prozesshilfsmittel (und entsprechend von der Formulierung zu dessen Herstellung) umfasst sein muss, insbesondere ein Tensid. Daher beträgt der Anteil des Biopolymers, beispielsweise eines Lignin-Sulfonats am Entformungsmittel nach Ausführungsformen höchstens 90 Gew.-%, vorzugsweise höchstens 70 Gew.-%.

Nach einer weiteren Ausführungsform umfasst das Prozesshilfsmittel bzw. die entsprechende Formulierung zu dessen Herstellung zwischen wenigstens 5 Gew.-% und höchstens 25 Gew.-% eines Tensids und/oder einer Abmischung von wenigstens zwei Tensiden. Sofern im Folgenden auf den Gehalt des Prozesshilfsmittels bzw. der Formulierung an Tensid abgestellt wird, bezieht sich das auf den Gesamtgehalt an Tensid.

Die Natur des Tensids bzw. der Tenside der Abmischung ist dabei allgemein nicht besonders beschränkt, sondern es kann sich allgemein um ein ionisches oder nichtionisches Tensid handeln. Besonders bevorzugt sind Mischungen aus anionischen und nichtionischen Tensiden. Der Tensidgehalt sollte nach einer Ausführungsform wenigstens 5 Gew.-% betragen, um, wie auch vorstehend ausgeführt, eine sichere Ausbildung eines flexiblen, jedoch ausreichend an der Oberfläche des erzeugten Produkts immobilisierten Trennfilms zu ermöglichen. Allerdings sollte der Tensidgehalt auch nicht zu hoch sein, da das Tensid im Prozesshilfsmittel bzw. der entsprechenden Formulierung nach Ausführungsformen eine Hilfssubstanz darstellt, die selbst nicht aktiv zur Trennung der Oberflächen beiträgt, sondern lediglich für eine gute Filmbildung sorgt. 25 Gew.-% stellen daher eine bevorzugte Obergrenze für diese Komponente dar, beispielsweise auch aus wirtschaftlichen Gründen.

Vorteilhaft kann das Tensid bzw. die Abmischung von Tensiden so ausgestaltet sein, dass das Tensid oder die Abmischung von wenigstens zwei Tensiden einen HLB-Wert zwischen 3 und 20 aufweist, vorzugsweise zwischen 6 bis 18, besonders bevorzugt 6 bis 15, wobei im Falle des Vorliegens einer Abmischung der HLB-Wert sich auf den resultierenden HLB-Wert der Abmischung bezieht. Auf diese Weise ist eine besonders gute Filmbildung gewährleistet. Unter dem HLB-Wert wird im Rahmen der Offenbarung der nach William C. Griffin ermittelte HLB-Wert verstanden.

Gemäß einer weiteren Ausführungsform umfasst das Prozesshilfsmittel bzw. die entsprechende Formulierung zur Herstellung eines Prozesshilfsmittels als eine weitere Komponente bis zu einschließlich 20 Gew.-% wenigstens einer wasserlöslichen Seife, vorzugsweise bis zu einschließlich 10 Gew.-%. Allgemein wird hier verstanden, dass das Prozesshilfsmittel wenigstens eine wasserlösliche Seife umfassen kann oder ein Gemisch von wasserlöslichen Seifen, wobei der angegebene Gehalt von höchstens 20 Gew.-% bzw. höchstens 10 Gew.-% sich in dem Fall, dass das Entformungsmittel mehr als eine wasserlösliche Seife umfasst, auf den Gesamtgehalt bezieht.

Allgemein wird verstanden, dass das Prozesshilfsmittel bzw. die Formulierung nach Ausführungsformen wenigstens eine Metallseife umfassen kann oder mehrere Metallseifen. Allgemein kann der Gesamtgehalt an Metallseifen (also von wasserlöslichen und/oder wasserunlöslichen Metallseifen) bis zu 60 Gew.-% betragen, wobei sich diese Angabe auf den Gesamtgehalt an Metallseifen bezieht. Allgemein gilt im Rahmen der vorliegenden Anmeldung, dass sich eine Gehaltsangabe einer Komponente, wenn mehrere dieser Komponenten in der Formulierung und/oder im Prozesshilfsmittel vorhanden sind, auf die Summe dieser Komponenten bezieht, also beispielsweise auf die Summe der von der Formulierung/dem Prozesshilfsmittel umfassten Metallseifen. Beispielsweise kann der Gehalt an wasserunlöslichen Metallseifen in der Formulierung bei höchstens 40 Gew.-% liegen vorzugsweise zwischen mindestens 15 Gew.-% und höchstens 35 Gew.-%, wobei sich diese Angabe dann auf den Gesamtgehalt an wasserunlöslichen Metallseifen bezieht, also für den Fall, dass das Prozesshilfsmittel bzw. die Formulierung mehr als eine wasserunlösliche Metallseife umfasst, die angegebenen Grenzen sich auf die Summe der umfassten wasserunlöslichen Metallseifen beziehen.

Ein Beispiel einer besonders vorteilhaften wasserunlöslichen Metallseife oder eine Gruppe von wasserunlöslichen Metallseifen sind die Stearate, insbesondere die Stearate von Erdalkalimetallen, insbesondere Magnesium- und/oder Calcium-Stearate oder Mischungen hiervon. Insbesondere kann daher nach einer Ausführungsform das Prozesshilfsmittel bzw. die Formulierung bis zu 40 Gew.-% eines Stearats, vorzugsweise eines Stearats eines Erdalkalimetalls, vorzugsweise eines Magnesium- und/oder eines Calcium-Stearats oder Mischungen hiervon, vorzugsweise zwischen mindestens 15 Gew.-% und höchstens 35 Gew.-%, umfassen.

Bei den wasserlöslichen Seifen kann es sich beispielhaft um Stearate und/oder Oleate von Natrium oder Kalium oder einer Mischung hiervon handeln. Bei Oleaten handelt es sich um die Salze der Ölsäure bzw. Oleinsäure.

Nach einer nochmals weiteren Ausführungsform umfasst das Prozesshilfsmittel bzw. die Formulierung zu dessen Herstellung als zusätzliche Komponente wenigstens ein Additiv, wobei das Prozesshilfsmittel mehrere Additive umfassen kann, und vorzugsweise der Gehalt an Additiv oder, für den Fall, dass das Prozesshilfsmittel bzw. die Formulierung mehrere Additive umfasst, an Additiven, zwischen 1 Gew.-% und 3 Gew.-% betragen.

Additive sind allgemein Zusatzstoffe, welche einer Formulierung bzw. einem Prozesshilfsmittel, wie einem Trenn- oder Entformungsmittel, zugegeben werden können, um bestimmte Eigenschaften zu verbessern bzw. zu justieren. Hierbei kann es sich allgemein um bekannte Hilfsstoffe handeln, beispielweise Eindickungsmittel, Entschäumer oder ähnliche Komponenten, die dem Fachmann allgemein bekannt sind.

Es ist weiterhin möglich, dass nach einer Ausführungsform die Formulierung bzw. das Prozesshilfsmittel wenigstens ein Trennkörperelement, welches auf einer anorganischen Phase beruht, umfasst. Dies ist zwar insgesamt für das Prozesshilfsmittel nach Ausführungsformen der Offenbarung nicht zwingend erforderlich, und gerade in Umgebungen, in denen der Wunsch ist, möglichst partikelfrei zu arbeiten, kann es sein, dass Ausführungsformen ohne ein Trennkörperelement, welches auf einer anorganischen Phase beruht, bevorzugt sind.

Allerdings hat sich allgemein gezeigt, dass die Verwendung eines Biopolymers, wie beispielsweise Lignin bzw. Lignin-Sulfonat, in Kombination mit einer anorganischen Pulverkomponente oder mit mehreren solcher Pulverkomponenten ebenfalls vorteilhaft sein kann. Auf diese Weise erhält man, wie beispielsweise im Rasterelektronenmikroskop sichtbar, einen "sehr dicken" Trennfilm, worunter eine Dicke im einstelligen Mikrometerbereich, beispielsweise von bis zu 2 µm oder bis zu 1 µm, verstanden wird. Unabhängig von der Dicke des Trennfilms sind die erfindungsgemäßen Trennfilme sichtbar oder werden zumindest während der Anwendung sichtbar. Wie vorstehend in Bezug auf bekannte Prozesshilfsmittel umfassend solche anorganischen Pulverkomponenten beschrieben, brauchen diese häufig eine sogenannte Quellzeit, um ihre entformende Wirkung optimal zu entfalten und dabei gleichzeitig auch die Dispersion zu stabilisieren, indem sie eindickend wirken und so einer Phasenseparation, beispielsweise einem Absetzen, entgegenwirken. Dies betrifft insbesondere den Fall sogenannter Schichtsilikate, wie beispielhaft Talkum und/oder Bentonit.

Es hat sich allgemein gezeigt, dass allgemein ein Biopolymer, wie beispielsweise Lignin oder ein Lignin-Derivat wie Lignin-Sulfonat, in partikelbasierten Zusammensetzungen eines Prozesshilfsmittels nicht nur überraschenderweise dessen Viskosität senkt, was beispielsweise für einen gleichmäßigen und dünnen Auftrag vorteilhaft sein kann, sondern solche Prozesshilfsmittel umfassend ein Biopolymer, wie Lignin und/oder ein Lignin-Derivat wie Lignin-Sulfonat,, insbesondere in den Grenzen, welche in den Ausführungsformen der Offenbarung genannt sind, ebenfalls dem Absetzen entgegenwirkt. Dies ist besonders überraschend, weil das hier verwendete Biopolymer, beispielsweise Lignin und/oder ein Derivat von Lignin wie beispielsweise Lignin-Sulfonat, ja, wie vorstehend auch erläutert, die Viskosität des resultierenden Prozesshilfsmittels an sich senkt. Vorteilhaft ist ebenfalls, wenn das Biopolymer, anders als die bekannten anorganischen Pulverkomponenten, keine Quellzeit benötigt, um seine stabilisierende Wirkung zu entfalten. Dies ist insbesondere vorteilhaft bei Ausgestaltungen des Biopolymers als Lignin umfassend und/oder ein Lignin-Derivat, wie beispielsweise Lignin-Sulfonat, umfassend, der Fall, sodass solche Ausführungen der Formulierung bzw. des Prozesshilfsmittels besonders bevorzugt sind. Weiterhin hat sich ebenfalls gezeigt, dass gerade Lignin-haltige Rückstände, die bei unsachgemäßer Anwendung in der Anwendung entstehen können, abwaschbar ausgebildet sind und daher, sollte dies erforderlich sein, sehr leicht und mit wenig Aufwand entfernt werden können, beispielsweise von einer Form. In der Kombination von Lignin oder eines Lignin-Derivats, beispielsweise von Lignin-Sulfonat, und einer anorganischen Pulverkomponente liegen damit synergistische Vorteile, da beispielsweise ein geringerer Anteil einer anorganischen Pulverkomponente verwendet werden kann und diese dann aufgrund der insgesamt guten Abwaschbarkeit des Lignin-Anteils auch besser abreinigbar ist in den Fällen, in denen dies anwendungstechnisch erwünscht ist.

Vorzugsweise kann das Prozesshilfsmittel bzw. die Formulierung zu dessen Herstellung nach dieser Ausführungsform bis zu 50 Gew.-% eines Trennkörperelements, welches auf einer anorganischen Phase beruht oder eines Gemischs von Trennkörperelementen, welche auf einer anorganischen Phase beruhen, vorzugsweise eines Schichtsilikats oder eines Gemischs von Pulverkomponenten, umfassen.

Die Formulierung kann im Wesentlichen wasserfrei ausgebildet sein, worunter verstanden wird, dass die Formulierung Wasser lediglich in Form unvermeidlicher Reste umfasst, beispielsweise in Form von adsorptiv gebundenem Wasser, umfasst. Solche unvermeidlichen Reste liegen in Form von höchstens 15 Gew.-%, vorzugsweise höchstens 10 Gew.-%, besonders bevorzugt höchstens 5 Gew.-%, bezogen auf das Gewicht der Formulierung, vor. Höhere Wassergehalte sind allerdings auch möglich, wobei in diesem Fall allerdings der Übergang von einer Formulierung zu einem Prozesshilfsmittel fließend und durch den Wert der anwendungsfertigen Darreichungsform bzw. Konzentration definiert ist. Es ist aber auch möglich, dass die Formulierung eine flüssige Komponente in Form eines Lösungsmittels umfasst, welche von Wasser verschieden sein kann.

Überraschenderweise hat sich gezeigt, dass eine Formulierung, bestehend aus einem Biopolymer, wie Lignin und/oder ein Lignin-Derivat wie Lignin-Sulfonat, und einer Metallseife selber ohne den Zusatz von Wasser auch als Prozesshilfsmittel verwendet werden kann.

### Beispiele

Im Folgenden wird ein beispielhafter Zusammensetzungsbereich für eine Formulierung nach Ausführungsformen, bzw. eines Prozesshilfsmittels nach der vorliegenden Offenbarung aufgelistet. Für das Prozesshilfsmittel beziehen sich die Angaben insbesondere auf die neben der wässrigen Phase vorliegende Aktivsubstanz, insbesondere hinsichtlich der Angaben der Gehalte. Insbesondere kann es sich nach der Überführung der Formulierung in ein Prozesshilfsmittel allgemein um ein wässriges Prozesshilfsmittel handeln, worunter allgemein verstanden wird, dass die flüssige Komponente bzw. das Lösungsmittel Wasser umfasst. Alle Angaben erfolgen dabei hier in Gew.-%.

| | |
|---|---|
| Biopolymer | mehr als 20, bevorzugt wenigstens 35 Gew.-%, vorzugsweise höchstens 90 Gew.-%, besonders bevorzugt wenigstens 50 Gew.-% und vorzugsweise höchstens 70 Gew.-%, |
| Tensid(e) | 5 Gew.-% bis 25 Gew.-%, |
| Wasserlösliche Seife(n) | bis zu einschließlich 20 Gew.-%, vorzugsweise bis zu einschließlich 10 Gew.-%, |
| Wasserunlösliche Metallseife(n) | bis zu 40 Gew.-%, vorzugsweise zwischen mindestens 15 Gew.-% und höchstens 35 Gew.-%, |
| optional Additiv(e) | sofern vorhanden, zwischen 1 Gew.-% und 3 Gew.-%, |
| optional Trennkörperelement(e) | sofern vorhanden, bis zu 50 Gew.-%, |

wobei das Biopolymer bevorzugt Lignin oder ein Lignin-Derivat, insbesondere Lignin-Sulfonat, ist oder umfasst.

Bei den Komponenten kann es sich, wie vorstehend im Hinblick auf Ausführungsformen bereits ausgeführt, im Falle des Biopolymers insbesondere beispielsweise um ein Alkali-und/oder Erdalkali-Lignin-Sulfonat handeln, wobei unter einem Alkali- und/oder Erdalkali-Lignin-Sulfonat insbesondere verstanden werden ein Natrium-, Calcium-, Magnesium- und/oder Ammonium-Lignin-Sulfonat und/oder Mischungen hiervon, besonders bevorzugt ein Natrium-Lignin-Sulfonat.

Als wasserlösliche Seife oder Seifen kommt insbesondere ein Stearat oder ein Oleat oder Mischungen von einen oder mehreren Stearaten oder Oleaten oder Mischungen heirvon in Betracht, beispielsweise bis zu insgesamt 20 Gew.-%, vorzugsweise ein Natrium- und/oder Kalium-Stearat und/oder ein Natrium- und /oder Kalium-Oleat oder Mischungen hiervon, vorzugsweise bis zu einschließlich 10 Gew.-%.

Als wasserunlösliche Metallseife kommt insbesondere ein Stearat in Betracht oder Mischungen von Stearaten von Erdalkalimetallen, vorzugsweise ein Magnesium- und/oder ein Calcium-Stearat oder Mischungen hiervon.

Nach einer Ausführungsform des Prozesshilfsmittels und/oder der Formulierung umfasst dieses bzw. diese keine anorganischen Pulverkomponenten.

Die Offenbarung betrifft ferner auch ein Verfahren zur Herstellung eines Prozesshilfsmittels, umfassend die folgenden Schritte:
- Vorlegen einer Formulierung, insbesondere einer Formulierung nach einer Ausführungsform,
- Vorlegen einer Flüssigkeit, vorzugsweise aus oder umfassend Wasser,
- Dispergieren der Formulierung in der Flüssigkeit unter Erhalt eines Prozesshilfsmittels.

Die Offenbarung betrifft daher auch ein Prozesshilfsmittel, hergestellt oder herstellbar aus einer Formulierung nach einer Ausführungsform der Offenbarung und/oder in einem Verfahren nach der Offenbarung.

### Beschreibung der Zeichnungen

Die Erfindung wird im Folgenden anhand von Zeichnungen weiter beschrieben. Es zeigen:
- Fig. 1: die Darstellung zweier Grundbausteine von Lignin, und
- Fig. 2 und 3: beispielhafte rasterelektronenmikroskopische Aufnahmen eines Trennfilms.

Fig. 1 a) zeigt den sogenannten "Guajacyl-Baustein" als ein Beispiel für eine Phenylpropaneinheit, welche ein Grundbaustein von Lignin ist. Wie man sehen kann, umfasst diese Struktur einen Benzolring mit einer Propylkette (n-Propyl) als Substituent, sowie weiterhin einer Hydroxylgruppe sowie einer Methoxygruppe als weitere Substituenten des Benzolrings.

Fig. 1b) zeigt den sogenannten "Syringyl-Baustein", als ein weiteres Beispiel einer Phenylpropaneinheit als einem möglichen Grundbaustein von Lignin. Hier umfasst das Molekül zwei Methoxygruppen im Gegensatz zu lediglich einer bei der Molekülstruktur nach Fig. 1a).

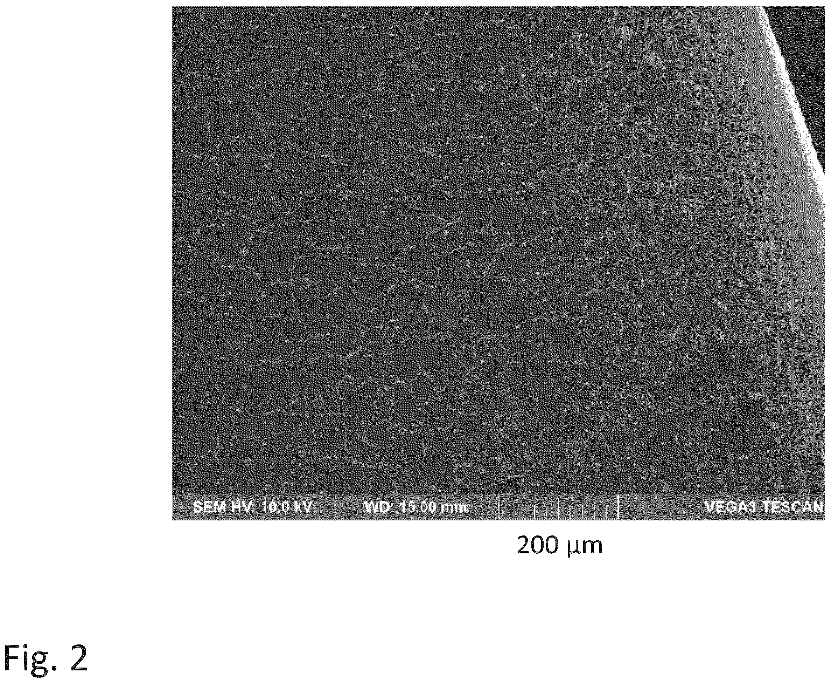

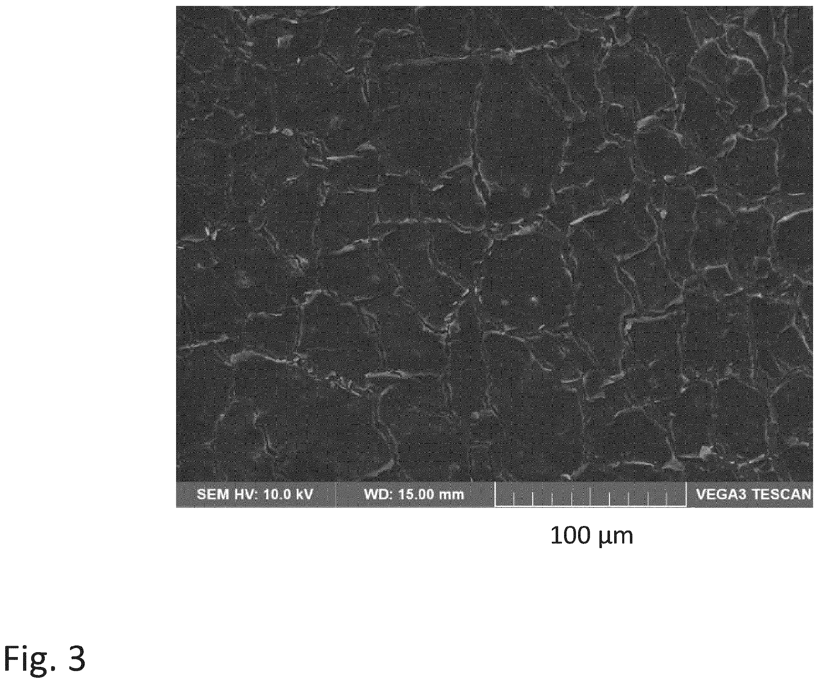

Fig. 2 und 3 zeigen beispielhafte rasterelektronenmikroskopische Aufnahmen von einer Gummioberfläche, welche mit einem Prozesshilfsmittel nach einer Ausführungsform behandelt, hier beschichtet, wurde. Der Maßstab ist jeweils angegeben; Fig. 3 ist eine Vergrößerung des Films nach Fig. 2. Für den Beschichtungsprozess wurde das im vorliegenden Falle ein Trennkörperelement, welches auf einer anorganischen Phase beruht, umfassende Prozesshilfsmittel in Wasser dispergiert und das die Gummioberfläche wurde durch Eintauchen in das wässrige Prozesshilfsmittel mit dem Prozesshilfsmittel belegt, sodass sich ein Oberflächenfilm auf der Gummioberfläche ausbilden konnte.

Wie anhand der Abbildungen in Fig, 2 und 3 zu erkennen ist, ist die Gummioberfläche nahezu vollständig beschichtet. Demnach kann die Oberfläche des Gummis nicht oder kaum mit den Oberflächen anderer Materialien in einen direkten Kontakt treten. Somit ist unter anderem sichergestellt, dass die Gummioberfläche passiviert ist und zusätzlich/zusammen mit den im Prozesshilfsmittel eingebrachten Abstandshaltern (hier neben Lignin-Sulfonatbestandteilen insbesondere auch ein Trennkörperelement, welches auf einer anorganischen Phase beruht) eine Trennwirkung zu anderen Oberflächen erzielt wird. Die Beschichtung aus Prozesshilfsmittel (also der Trennfilm) ist durchzogen von Lamellen-artigen Strukturen, so dass der Trennfilm eine Mosaik-artige Struktur aufweist, in der die einzelnen Bestandteile des Films (Kacheln) unregelmäßig ausgeprägt sind, aber hinsichtlich Größe und Verteilung eine gewisse Ähnlichkeit aufweisen. Dies führt zu einer hohen Flexibilität des Trennfilms. Dadurch ist sichergestellt, dass das Fehlen eines einzigen oder von wenigen Mosaikbauteilen, was bspw. durch Beschädigungen hervorgerufen werden kann, nicht zu einem Versagen des Trennfilms führen. (Schildkröt-Panzerartiges Muster mit hoher Flexibilität).

## Patentansprüche

1. Formulierung zur Herstellung eines Prozesshilfsmittels, vorzugsweise eines wässrigen Prozesshilfsmittels, umfassend ein Biopolymer, vorzugsweise ein Lignin und/oder ein Lignin-Derivat, besonders bevorzugt ein Lignin-Sulfonat, und wenigstens ein Tensid und/oder eine Abmischung von wenigstens zwei Tensiden.

2. Formulierung nach Anspruch 1, wobei das Tensid und/oder die Abmischung von wenigstens zwei Tensiden einen HLB- zwischen 3 und 20, vorzugsweise zwischen 6 bis 18, besonders bevorzugt 6 bis 15 aufweist, wobei im Falle des Vorliegens einer Abmischung der HLB-Wert sich auf den resultierenden HLB-Wert der Abmischung bezieht.

3. Formulierung nach einem der Ansprüche 1 oder 2, weiterhin umfassend eine wasserunlösliche Metallseife, vorzugsweise ein Stearat, besonders bevorzugt ein Magnesium- und/oder ein Calcium-Stearat oder Mischungen hiervon.

4. Formulierung nach einem der Ansprüche 1 bis 3, wobei das Biopolymer Lignin-Sulfonat ist oder umfasst, insbesondere ein Alkali- und/oder ein Erdalkali-Lignin-Sulfonat, wobei unter einem Alkali- und/oder Erdalkali-Lignin-Sulfonat insbesondere verstanden werden ein Natrium-, Calcium-, Magnesium- und/oder Ammonium-Lignin-Sulfonat und/oder Mischungen hiervon, besonders bevorzugt ein Natrium-Lignin-Sulfonat.

5. Formulierung nach einem der Ansprüche 1 bis 4, wobei die Formulierung wenigstens 20 Gew.-%, bevorzugt wenigstens 35 Gew.-%, und höchstens 90 Gew.-% eines Biopolymers, bevorzugt von Lignin oder einem Lignin-Derivat, vorzugsweise von Lignin-Sulfonat, umfasst, bevorzugt zwischen 50 Gew.-% und 70 Gew.-% eines Biopolymers, bevorzugt von Lignin oder einem Lignin-Derivat, vorzugsweise von Lignin-Sulfonat.

6. Formulierung nach einem der Ansprüche 1 bis 5, wobei die Formulierung zwischen wenigstens 5 Gew.-% und 25 Gew.-% des Tensids oder der Abmischung von wenigstens zwei Tensiden umfasst.

7. Formulierung nach einem der Ansprüche 1 bis 6, umfassend bis zu einschließlich 20 Gew.-% wenigstens einer wasserlösliche Seife, vorzugsweise ein Natrium- und/oder Kalium-Stearat und/oder ein Natrium- und /oder Kalium-Oleat oder Mischungen hiervon, vorzugsweise bis zu einschließlich 10 Gew.-%.

8. Formulierung nach einem der Ansprüche 1 bis 7, umfassend bis zu 40 Gew.-% wasserunlösliche Metallseifen, vorzugsweise zwischen mindestens 15 Gew.-% und höchstens 35 Gew.-%.

9. Formulierung nach einem der Ansprüche 1 bis 8, weiter umfassend zwischen 1 Gew.-% und 3 Gew.-% Additive.

10. Formulierung nach einem der Ansprüche 1 bis 9, weiter umfassend wenigstens ein Trennkörperelement, welches auf einer anorganischen Phase beruht und als Pulverkomponente zugegeben werden kann.

11. Formulierung nach einem der Ansprüche 1 bis 10, umfassend die folgenden Komponenten in Gew.-%:
| | |
|---|---|
| Biopolymer | mehr als 20, bevorzugt wenigstens 35 Gew.-%, vorzugsweise höchstens 90 Gew.-%, besonders bevorzugt wenigstens 50 Gew.-% und vorzugsweise höchstens 70 Gew.-%, |
| Tensid(e) | 5 Gew.-% bis 25 Gew.-%, |
| Wasserlösliche Seife(n) | bis zu einschließlich 20 Gew.-%, vorzugsweise bis zu einschließlich 10 Gew.-%, |
| Wasserunlösliche Metallseife(n) | bis zu 40 Gew.-%, vorzugsweise zwischen mindestens 15 Gew.-% und höchstens 35 Gew.-%, |
| optional Additiv(e) | sofern vorhanden, zwischen 1 Gew.-% und 3 Gew.-%, |
| optional Trennkörperelement(e) | sofern vorhanden bis zu 50 Gew.-%, |
wobei das Biopolymer bevorzugt Lignin oder ein Lignin-Derivat, insbesondere Lignin-Sulfonat, ist oder umfasst.

12. Formulierung nach einem der Ansprüche 1 bis 9 oder 11, welche kein Trennkörperelement, welches auf einer anorganischen Phase beruht, umfasst.

13. Verfahren zur Herstellung eines Prozesshilfsmittels, umfassend die Schritte:
- Vorlegen einer Formulierung, insbesondere einer Formulierung nach einem der Ansprüche 1 bis 12,
- Vorlegen einer Flüssigkeit, vorzugsweise aus oder umfassend Wasser,
- Dispergieren der Formulierung in der Flüssigkeit unter Erhalt eines Prozesshilfsmittels.

14. Prozesshilfsmittel, hergestellt oder herstellbar aus einer Formulierung nach einem der Ansprüche 1 bis 12 und/oder in einem Verfahren nach Anspruch 13.
